# EUROPEAN PATENT APPLICATION

(11) **EP 4 708 716 A1**
(43) Date of publication of application: **11.03.2026**
(21) Application number: 24919711.2
(22) Date of filing: 28.08.2024
(51) Int. Cl.: H04B 7/06

(54) **COMMUNICATION APPARATUS, COMMUNICATION METHOD, COMMUNICATION SYSTEM, ELECTRONIC DEVICE AND STORAGE MEDIUM**

(30) Priority: 25.01.2024 CN 202410114463
(71) Applicant: Huawei Technologies Co., Ltd., Shenzhen, Guangdong 518129 (CN)
(72) Inventor: WANG, Shuqi, Shenzhen, Guangdong 518129 (CN); LI, Wenjun, Shenzhen, Guangdong 518129 (CN); LI, Weihua, Shenzhen, Guangdong 518129 (CN); YAN, Jinxing, Shenzhen, Guangdong 518129 (CN); JIAO, Lizhi, Shenzhen, Guangdong 518129 (CN); FAN, Donglei, Shenzhen, Guangdong 518129 (CN)
(74) Representative: Thun, Clemens
(86) International application number: PCT/CN2024/115185
(87) International publication number: WO 2025/156630

(57) **Abstract**

This application provides a communication apparatus, a communication method, a communication system, an electronic device, and a storage medium, applied to the field of communication technologies, to resolve a problem that a coverage area and an antenna gain of an existing smart antenna cannot meet use requirements in different use environments. The communication apparatus includes a multiplexer and a plurality of antenna structures. The multiplexer includes a common terminal and a plurality of selection terminals. The common terminal of the multiplexer is coupled to a radio frequency chain, and the common terminal is configured to switchably connect to different selection terminals of the plurality of selection terminals to form a plurality of paths. The plurality of antenna structures include a phased array antenna. The plurality of selection terminals include a first selection terminal. The phased array antenna is coupled to the first selection terminal. The plurality of antenna structures further include an omnidirectional antenna, the plurality of selection terminals further include a second selection terminal, and the omnidirectional antenna is coupled to the second selection terminal; and/or the plurality of antenna structures further include a directional antenna, the plurality of selection terminals further include a third selection terminal, and the directional antenna is coupled to the third selection terminal.

## Description

This application claims priority to Chinese Patent Application No. 202410114463.4, filed with the China National Intellectual Property Administration on January 25, 2024 and entitled "COMMUNICATION APPARATUS, COMMUNICATION METHOD, COMMUNICATION SYSTEM, ELECTRONIC DEVICE, AND STORAGE MEDIUM", which is incorporated herein by reference in its entirety.

### TECHNICAL FIELD

This application relates to the field of communication technologies, and in particular, to a communication apparatus, a communication method, a communication system, an electronic device, and a storage medium.

### BACKGROUND

To resolve difficult problems in wireless network environments and provide better coverage services, currently, many wireless devices are configured with smart antenna systems, to enhance signal strength between access points (access point, AP) and different clients (station, STA), and reduce interference between neighboring APs. Hardware of a smart antenna technology mainly includes an antenna array formed by a plurality of antennas. Combinations of different antennas in the antenna array may form different signal radiation directions, so that optimal antennas are selected for STAs at different locations, thereby improving received signal quality and improving a system throughput. However, an existing smart antenna has a limited coverage area and antenna gain and cannot meet use requirements in different environments.

### SUMMARY

This application provides a communication apparatus, a communication method, a communication system, an electronic device, and a storage medium, to resolve a problem that a limited coverage area and antenna gain of an existing smart antenna cannot meet use requirements in different environments.

To resolve the foregoing problems, embodiments of this application provide the following technical solutions.

According to a first aspect, a communication apparatus is provided. The communication apparatus includes a multiplexer and a plurality of antenna structures. The multiplexer includes a common terminal and a plurality of selection terminals. The common terminal of the multiplexer is coupled to a radio frequency chain, and the common terminal of the multiplexer is configured to switchably connect to different selection terminals of the plurality of selection terminals to form a plurality of paths. The plurality of antenna structures include a phased array antenna. The plurality of selection terminals include a first selection terminal. The phased array antenna is coupled to the first selection terminal. The plurality of antenna structures further include an omnidirectional antenna, the plurality of selection terminals further include a second selection terminal, and the omnidirectional antenna is coupled to the second selection terminal; and/or the plurality of antenna structures further include a directional antenna, the plurality of selection terminals further include a third selection terminal, and the directional antenna is coupled to the third selection terminal. In the foregoing manner, the multiplexer is controlled, so that a currently most appropriate antenna can be selected from a plurality of antennas having different directional capabilities, and advantages of the antennas having different directional capabilities are fully utilized, to improve signal strength while achieving optimal signal coverage, thereby improving a signal coverage area and an antenna gain.

In a possible implementation, the phased array antenna includes an adjustable phase shifter and an antenna array. The adjustable phase shifter includes a power divider and a plurality of adjustable phase shift circuits. The antenna array includes a plurality of antennas. The power divider includes a combining terminal and a plurality of splitting terminals. The combining terminal of the power divider is coupled to the first selection terminal. Each of the splitting terminals is coupled to one or more antennas in the antenna array through one of the adjustable phase shift circuits. The adjustable phase shift circuit is configured to perform multi-phase shift selection. In the foregoing manner, the adjustable phase shift circuit can perform multi-phase shift selection processing on signals to be output by each antenna in the antenna array, to achieve different beam pointing.

In a possible implementation, the adjustable phase shift circuit includes a first gating switch, a first phase shift circuit, and a second phase shift circuit. The first gating switch includes a common terminal, a first selection terminal, and a second selection terminal. The common terminal of the first gating switch is coupled to one of the splitting terminals of the power divider, a first terminal of the first phase shift circuit is coupled to the first selection terminal, a first terminal of the second phase shift circuit is coupled to the second selection terminal, and a second terminal of the first phase shift circuit and a second terminal of the second phase shift circuit are coupled to one or more same antennas in the antenna array. Alternatively, the common terminal of the first gating switch is coupled to one or more antennas in the antenna array, a first terminal of the first phase shift circuit and a first terminal of the second phase shift circuit are both coupled to one of the splitting terminals of the power divider, a second terminal of the first phase shift circuit is coupled to the first selection terminal, and a second terminal of the second phase shift circuit is coupled to the second selection terminal. In the foregoing manner, the first gating switch is controlled, so that switching operations of different phase shift processing may be implemented.

In a possible implementation, the adjustable phase shift circuit includes a first gating switch, a second gating switch, a first phase shift circuit, and a second phase shift circuit. Each of the first gating switch and the second gating switch includes a common terminal, a first selection terminal, and a second selection terminal. The common terminal of the first gating switch is coupled to one of the splitting terminals of the power divider. A first terminal of the first phase shift circuit is coupled to the first selection terminal of the first gating switch. A first terminal of the second phase shift circuit is coupled to the second selection terminal of the first gating switch. A second terminal of the first phase shift circuit is coupled to the first selection terminal of the second gating switch. A second terminal of the second phase shift circuit is coupled to the second selection terminal of the second gating switch. The common terminal of the second gating switch is coupled to one or more antennas. In the foregoing manner, phase shift processing on a signal can be implemented only when the first gating switch and the second gating switch are switched to a same phase shift circuit, so that a misoperation is avoided.

In a possible implementation, the antenna array includes a plurality of first polarized antennas in a first array antenna, and the directional antenna includes one or more second polarized antennas in the first array antenna. Alternatively, the antenna array includes a plurality second polarized antennas in a first array antenna, and the directional antenna includes one or more first polarized antennas in the first array antenna. The first polarized antenna and the second polarized antenna have different polarization directions.

According to a second aspect, a communication system is provided. The communication system includes a first transceiver circuit and a first communication apparatus coupled to the first transceiver circuit. The first communication apparatus is the communication apparatus in any one of the possible implementations of the first aspect.

In a possible implementation, the communication system further includes a second transceiver circuit and a second communication apparatus coupled to the second transceiver circuit. The second communication apparatus is the communication apparatus in any one of the possible implementations of the first aspect.

In a possible implementation, an antenna array in a phased array antenna of the first communication apparatus includes a plurality of first polarized antennas in a first array antenna. An antenna array in a phased array antenna of the second communication apparatus includes a plurality of second polarized antennas in a first array antenna. The first polarized antenna and the second polarized antenna have different polarization directions.

According to a third aspect, an electronic device is provided. The electronic device includes a baseband processor, and the communication system that is coupled to the baseband processor and that is in any one of the possible implementations of the second aspect.

According to a fourth aspect, a communication method is provided. The method is applied to the communication apparatus in any possible implementation of the first aspect. When the method is performed, channel quality of a plurality of paths is first obtained. Then, a multiplexer is controlled based on the channel quality to select a target path from the plurality of paths.

In a possible implementation, for obtaining of the channel quality of the plurality of paths, packet error rates and signal-to-noise ratios of the plurality of paths may be first obtained. Then, the channel quality of the plurality of paths is determined based on the packet error rates and the signal-to-noise ratios.

According to a fifth aspect, a computer-readable storage medium is provided. The computer-readable storage medium stores computer program instructions. When the computer program instructions are executed by a processor, the communication method in the fourth aspect is implemented.

According to a sixth aspect, a computer program product is provided. When the computer program product is executed by a processor, the communication method in the fourth aspect is implemented.

For technical effect brought by the second aspect to the sixth aspect and the possible implementations, refer to descriptions of technical effect brought by the first aspect and the possible implementations. Details are not described herein again.

### BRIEF DESCRIPTION OF DRAWINGS

FIG. 1 is a diagram of a structure of an electronic device;
FIG. 2 is a diagram of a structure of a communication apparatus;
FIG. 3 is a diagram of a structure of another communication apparatus;
FIG. 4 is a diagram of a structure of a communication apparatus according to an embodiment of this application;
FIG. 5 is a diagram of a structure of another communication apparatus according to an embodiment of this application;
FIG. 6 is a diagram of a structure of still another communication apparatus according to an embodiment of this application;
FIG. 7 is a diagram of a structure of still another communication apparatus according to an embodiment of this application;
FIG. 8 is a diagram of a relationship between an antenna gain and a beam direction according to an embodiment of this application;
FIG. 9 is a diagram of a structure of still another communication apparatus according to an embodiment of this application;
FIG. 10 is a diagram of a structure of still another communication apparatus according to an embodiment of this application;
FIG. 11 is a diagram of a structure of still another communication apparatus according to an embodiment of this application;
FIG. 12 is a diagram of a structure of still another communication apparatus according to an embodiment of this application;
FIG. 13 is a schematic flowchart of an antenna operation method according to an embodiment of this application;
FIG. 14 is a diagram of a structure of a communication system according to an embodiment of this application;
FIG. 15 is a diagram of a structure of another communication system according to an embodiment of this application; and
FIG. 16 is a diagram of a structure of an electronic device according to an embodiment of this application.

### DESCRIPTION OF EMBODIMENTS

The following describes the technical solutions in embodiments of this application with reference to the accompanying drawings in embodiments of this application.

To clearly describe technical solutions in embodiments of this application, terms such as "first" and "second" are used in the embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding. When some embodiments are described, expressions of "coupled" and "connected" and their extensions may be used. For example, for description of some embodiments, the term "connected" may indicate that two or more components are in direct physical contact or electrical contact with each other. For another example, for description of some embodiments, the term "coupled" may indicate that two or more components are in direct physical contact or electrical contact, or may indicate that two or more components are not in direct contact with each other, but still cooperate or interact with each other. Embodiments disclosed herein are not necessarily limited to content of this specification. The following describes this application in detail with reference to the accompanying drawings and embodiments.

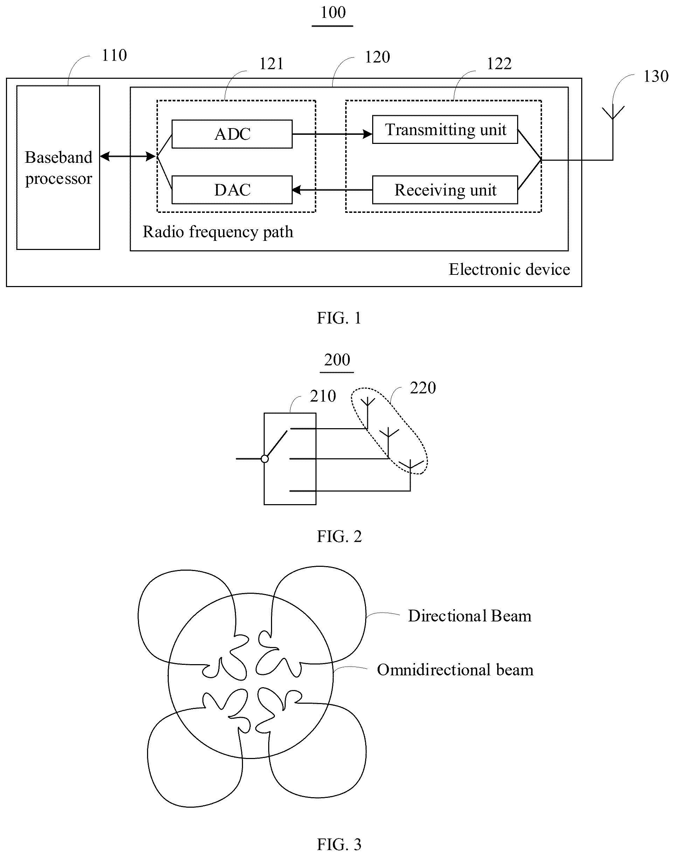

As shown in FIG. 1, with development of communication technologies, currently many electronic devices 100 are equipped with a baseband processor (baseband processor) 110, a radio frequency path 120, and an antenna 130. The radio frequency path 120 generally includes a conversion circuit 121 and a transceiver circuit 122. Each radio frequency path 120 corresponds to a radio frequency chain. The transceiver circuit 122 generally includes a receiving unit provided with a low noise amplifier and a transmitting unit provided with a power amplifier. The conversion circuit 121 generally includes an analog-to-digital converter (analog-to-digital converter, ADC) coupled to the receiving unit, and a digital-to-analog converter (digital-to-analog converter, DAC) coupled to the transmitting unit. A digital baseband signal generated by the baseband processor 110 may be converted into an analog signal by the DAC, amplified by the transmitting unit, and then transmitted via the antenna 130. After being amplified by the receiving unit, a signal received by the antenna 130 may be converted into a digital signal by the ADC. Then, the baseband processor 110 performs corresponding processing based on the received digital signal. However, in a current network environment, for example, in a wireless fidelity (wireless fidelity, Wi-Fi) environment, a coverage area of an antenna is limited and cannot meet use requirements in different scenarios. For example, currently, an electronic device used as an access point generally uses an omnidirectional antenna. However, the omnidirectional antenna has a limited gain, can provide better services for users at a short distance, and cannot provide services, or can provide only services with a low throughput for users at a medium distance or a long distance. In addition, in a high-density networking environment, multi-user concurrency causes a great increase in inter-link interference, consequently affecting a transmission throughput.

To resolve the foregoing problems, a structure of the antenna may be improved. As shown in FIG. 2, a conventional antenna may be replaced by a communication apparatus 200 that includes a multiplexer 210 and a plurality of directional antennas 220. The multiplexer 210 may use a multi-channel gating switch that includes one common terminal and a plurality of selection terminals. Each selection terminal of the multiplexer 210 may be coupled to one directional antenna 220. The common terminal of the multiplexer 210 is configured to couple to a transceiver circuit. During communication, the multiplexer 210 may connect a common terminal to a corresponding selection terminal based on a received gating control signal, to perform data exchange with a device in a specific direction. The directional antenna transmits and receives electromagnetic waves particularly strong in one or several specific directions, but transmits and receives zero or very few electromagnetic waves in other directions. Therefore, using the directional antenna can improve effective utilization of radiated power. However, a single directional antenna transmits a beam with a small gain, resulting in a short signal transmission distance, and there is still a problem of a limited coverage area. To implement more comprehensive signal coverage, a change of a geometric shape of a main antenna may be controlled, so that a change of an antenna beam direction is implemented. In an example, as shown in FIG. 3, when the change of the geometric shape of the main antenna is controlled, output of an omnidirectional beam and a plurality of directional beams may be implemented. However, an omnidirectional beam gain in this solution is small, resulting in a short signal transmission distance, and users at a medium distance or a long distance cannot be provided with services or can be provided with only services with a low throughput. In addition, a coverage area of the directional beam is also limited. Therefore, there is still a problem of a limited coverage area.

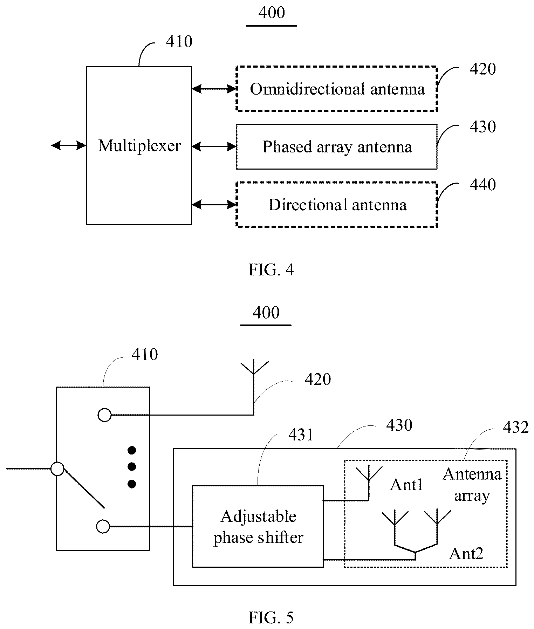

To fully resolve the foregoing problem, as shown in FIG. 4, an embodiment of this application provides a communication apparatus 400. The communication apparatus 400 includes a multiplexer 410 and a plurality of antenna structures. A common terminal of the multiplexer 410 is coupled to a radio frequency chain, and the common terminal of the multiplexer 410 is configured to switchably connect to different selection terminals of a plurality of selection terminals to form a plurality of paths. The foregoing plurality of antenna structures include a phased array antenna 430, the foregoing plurality of selection terminals include a first selection terminal, and the phased array antenna 430 is coupled to the first selection terminal. The foregoing plurality of antenna structures further include an omnidirectional antenna 420, the foregoing plurality of selection terminals further include a second selection terminal, and the omnidirectional antenna 420 is coupled to the second selection terminal; and/or the foregoing plurality of antenna structures further include a directional antenna 440, the foregoing plurality of selection terminals further include a third selection terminal, and the directional antenna 440 is coupled to the third selection terminal. During specific implementation, the foregoing communication apparatus 400 may be coupled to a transceiver circuit of a radio frequency chain in a communication system having a plurality of radio frequency chains. The multiplexer 410 may be coupled to a processor. The processor may control the multiplexer 410 and select a path to be enabled by the multiplexer 410, to perform data exchange through a corresponding antenna. The processor may obtain signal-to-noise ratios and packet error rates of the plurality of paths of the multiplexer, then comprehensively determine, based on the signal-to-noise ratios and the packet error rates (packet error rate, PER) of the plurality of paths, a target antenna that currently needs to be used, and send a control signal to the multiplexer 410 to enable a corresponding target path. The foregoing target path is a channel with best path quality of a path corresponding to the phased array antenna 430, the omnidirectional antenna 420, or the directional antenna 440. Based on this, the multiplexer 410 is controlled, so that a currently most appropriate antenna can be selected from the foregoing plurality of antennas having different directional capabilities, and advantages of the antennas having different directional capabilities are fully utilized, to improve signal strength while achieving optimal signal coverage, thereby improving a signal coverage area and an antenna gain.

In some implementation solutions, as shown in FIG. 5, an antenna in the communication apparatus 400 may include the omnidirectional antenna 420 and the phased array antenna 430. The multiplexer 410 may use a single-pole double-throw (single pole double throw, SPDT) switch that includes a common terminal and two selection terminals. The common terminal of the single-pole double-throw switch is configured to couple to a transceiver circuit of a radio frequency chain. A first selection terminal of the single-pole double-throw switch is coupled to the omnidirectional antenna, and a second selection terminal of the single-pole double-throw switch is coupled to the phased array antenna 430. The phased array antenna 430 includes an adjustable phase shifter 431 and an antenna array 432. When data exchange needs to be performed, the multiplexer 410 may connect the common terminal to the first selection terminal by using a control signal output by a coupled processor, to perform the data exchange through the omnidirectional antenna. Alternatively, the multiplexer 410 may connect the common terminal to the second selection terminal by using a control signal output by a coupled processor, to perform the data exchange through the phased array antenna 430. Certainly, the foregoing omnidirectional antenna 420 may also be replaced with the directional antenna 440. Details are not described herein in this embodiment of this application.

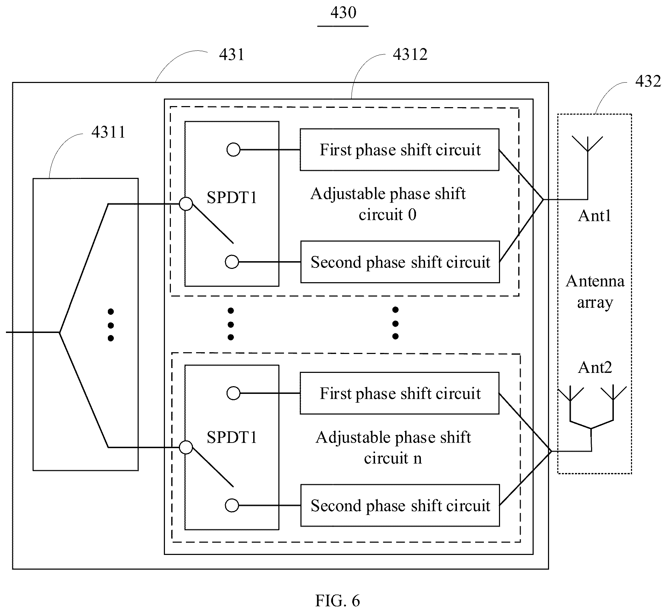

In an implementation solution, as shown in FIG. 6, the adjustable phase shifter 431 includes a power divider 4311 and a plurality of adjustable phase shift circuits 4312. The power divider 4311 includes a combining terminal and a plurality of splitting terminals. The antenna array 432 includes a plurality of antennas. The combining terminal of the power divider 4311 is coupled to the first selection terminal of the multiplexer 410. Each of the splitting terminals is coupled to one or more antennas in the antenna array 432 through one of the adjustable phase shift circuits 4312. The adjustable phase shift circuit 4312 is configured to perform multi-phase shift selection. For example, still as shown in FIG. 6, the adjustable phase shift circuit 4312 may be coupled to one antenna in the antenna array 432, for example, an adjustable phase shift circuit 0 and an antenna Ant1 in FIG. 6. A phase of a signal output by the adjustable phase shift circuit 4312 is adjusted, so that a phase of a signal transmitted by each antenna can be controlled, and a direction of a beam transmitted by the phased array antenna 430 is controlled. Certainly, the adjustable phase shift circuit 4312 may also be coupled to the plurality of antennas in the antenna array 432, for example, an adjustable phase shift circuit n and an antenna Ant2 in FIG. 6. A phase of a signal output by the adjustable phase shift circuit 4312 may simultaneously control phases of signals transmitted by the plurality of antennas, to control directions of beams transmitted by the phased array antenna 430. It may be understood that a quantity of antennas coupled to the adjustable phase shift circuit 4312 is merely an example, and may be adjusted according to an actual requirement during specific implementation.

In the foregoing implementation process, the antenna array 432 may include some antennas in an array antenna or include all antennas in an array antenna. This is not specifically limited in this embodiment of this application. In addition, the multiplexer 410, the power divider 4311, and the adjustable phase shift circuit 4312 may be integrated into a same chip, or may be separately disposed on different semiconductor components. This is not specifically limited in this embodiment of this application.

In an example, still as shown in FIG. 6, the adjustable phase shift circuit 4312 may include a first gating switch SPDT1, a first phase shift circuit, and a second phase shift circuit. The first gating switch SPDT1 includes a common terminal, a first selection terminal, and a second selection terminal. The common terminal of the first gating switch SPDT1 is coupled to one of the splitting terminals of the power divider. A first terminal of the first phase shift circuit is coupled to the first selection terminal of the first gating switch SPDT1. A first terminal of the second phase shift circuit is coupled to the second selection terminal of the first gating switch SPDT1. A second terminal of the first phase shift circuit and a second terminal of the second phase shift circuit are coupled to one or more same antennas in the antenna array. For example, in FIG. 6, the antenna Ant1 is one antenna, and the antenna Ant2 is two antennas.

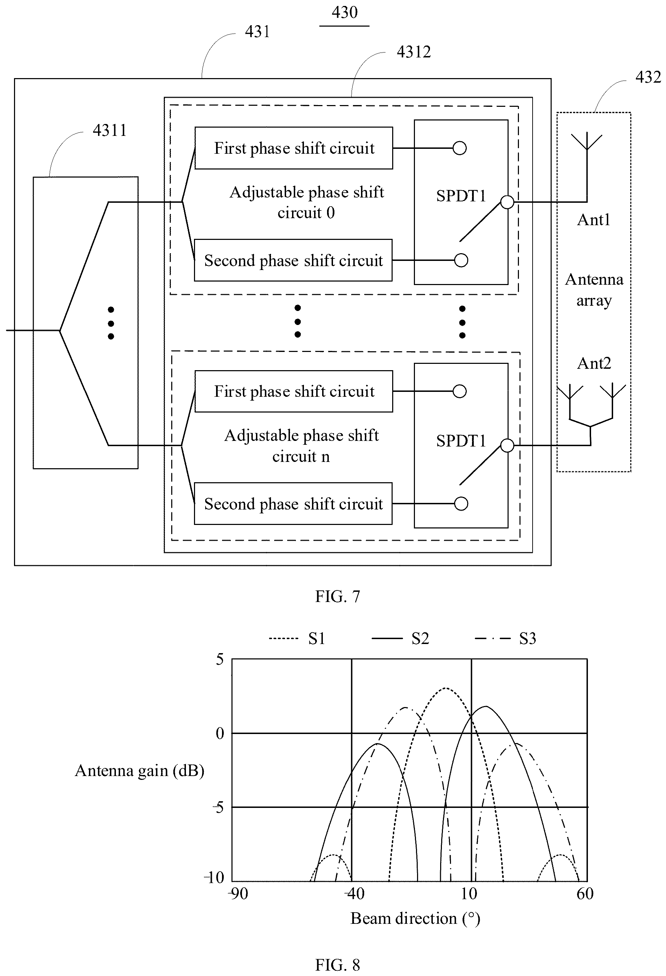

In another example, as shown in FIG. 7, the adjustable phase shift circuit 4312 may include a first gating switch SPDT1, a first phase shift circuit, and a second phase shift circuit. The first gating switch SPDT1 includes a common terminal, a first selection terminal, and a second selection terminal. The common terminal of the first gating switch SPDT1 is coupled to one or more antennas in the antenna array. For example, in FIG. 7, Ant1 is one antenna, and Ant2 is two antennas. A first terminal of the first phase shift circuit and a first terminal of the second phase shift circuit are both coupled to one of the splitting terminals of the power divider. A second terminal of the first phase shift circuit is coupled to the first selection terminal of the first gating switch SPDT1. A second terminal of the second phase shift circuit is coupled to the second selection terminal of the first gating switch SPDT1. The first gating switch SPDT1 may be coupled to a processor, and choose to conduct the first phase shift circuit and the second phase shift circuit based on a control signal sent by the processor.

It may be understood that a structure of the adjustable phase shift circuit 4312 is merely an example provided in this embodiment of this application. During specific implementation, the foregoing adjustable phase shift circuit 4312 may include more phase shift circuits, and a quantity of selection terminals of the first gating switch SPDT1 may also be adaptively adjusted based on a quantity of phase shift circuits. Details are not described in this embodiment of this application.

In an implementation solution, the foregoing first phase shift circuit and the second phase shift circuit may use digital phase shift circuits. A phase shift value of the digital phase shift circuit is discrete, and can only be an integer multiple of 360×(1/2)n, where n in the formula is a quantity of bits of a digital phase shifter. For example, a phase shift value of a 3-bit digital phase shifter can only be ±45°, ±90°, ±135°, ±180°, ±225°, ±270°, ±315°, or ±360°. In an example, it is assumed that the communication apparatus 400 includes the omnidirectional antenna 420 and the phased array antenna 430, and the multiplexer 410 is a single-pole double-throw switch. The omnidirectional antenna 420 is coupled to the first selection terminal of the multiplexer 410. The phased array antenna 430 is coupled to the second selection terminal of the multiplexer 410. The antennas Ant1 and Ant2 coupled to the adjustable phase shift circuit 4312 are a single-chain 1×2 antenna array in an array antenna. If a phase shift value of the first phase shift circuit is 0°, and a phase shift value of the second phase shift circuit is 135° or -135°, control logic and antenna selection of the multiplexer 410 are shown in Table 1, and a relationship between a beam direction and an antenna gain of the phased array antenna 430 is shown in FIG. 8. With reference to Table 1 and FIG. 8, it can be learned that a phase difference between the plurality of antennas in the phased array antenna 430 is controlled, so that an antenna gain in a specific beam direction can be enhanced, and a transmission throughput of a user equipment in a specific direction is improved. Certainly, phase shift values of the first phase shift circuit and the second phase shift circuit may be adjusted according to the actual requirement. This is not specifically limited in this embodiment of this application.

**Table 1**

| Selection terminal of the multiplexer | Phase shift state | Antenna selection | Phase difference between Ant1 and Ant2 |
|---|---|---|---|
| 0 | / | Omnidirectional antenna | / |
| 1 | S1 | Array antenna | 0 degrees |
| 1 | S2 | Array antenna | 135 degrees |
| 1 | S3 | Array antenna | 135 degrees |

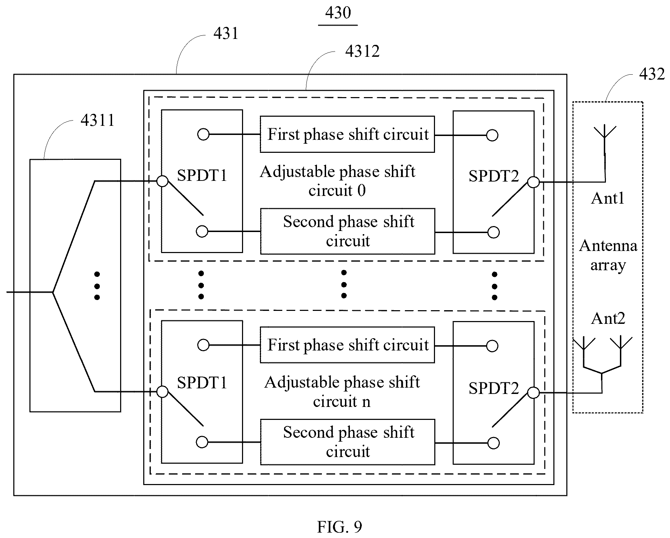

In another implementation solution, as shown in FIG. 9, the foregoing adjustable phase shifter 431 may include a first gating switch SPDT1, a second gating switch SPDT2, a first phase shift circuit, and a second phase shift circuit. Each of the first gating switch SPDT1 and the second gating switch SPDT2 include a common terminal, a first selection terminal, and a second selection terminal. The common terminal of the first gating switch SPDT1 is coupled to one of the splitting terminals of the power divider. A first terminal of the first phase shift circuit is coupled to the first selection terminal of the first gating switch SPDT1. A first terminal of the second phase shift circuit is coupled to the second selection terminal of the first gating switch SPDT1. A second terminal of the first phase shift circuit is coupled to the first selection terminal of the second gating switch SPDT2. A second terminal of the second phase shift circuit is coupled to the second selection terminal of the second gating switch SPDT2. The common terminal of the second gating switch SPDT2 is coupled to one or more antennas. For example, in FIG. 9, Ant1 is one antenna, and Ant2 is two antennas. The first gating switch SPDT1 and the second gating switch SPDT2 may be coupled to a processor, and choose to conduct the first phase shift circuit or the second phase shift circuit based on a control signal sent by the processor. In the foregoing manner, phase shift processing can be performed on a transmitted signal only when two gating switches are conducted with a same phase shift circuit, to avoid a misoperation.

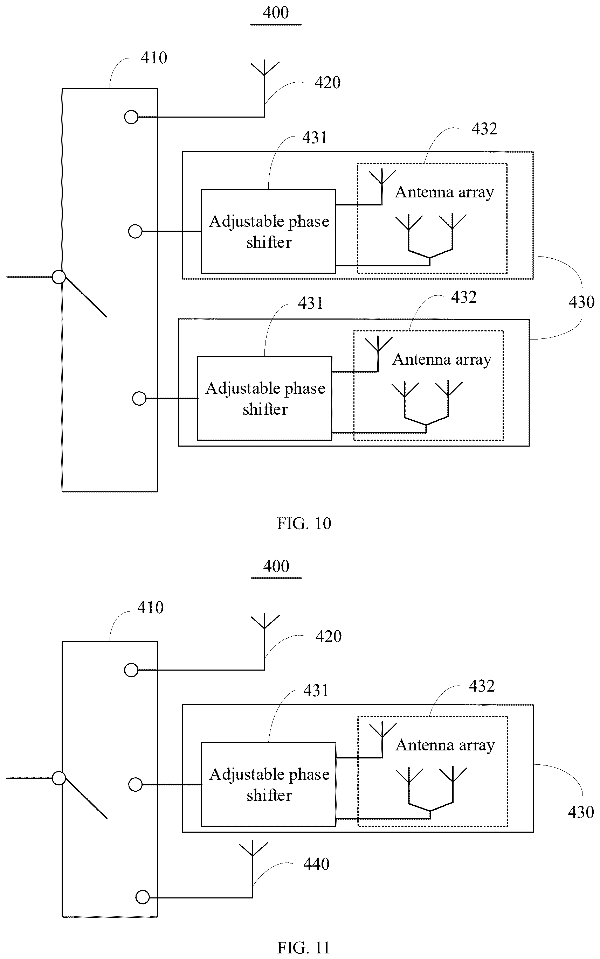

In some implementations, as shown in FIG. 10, the multiplexer 410 may use a single-pole triple-throw switch that includes a common terminal and three selection terminals. A first selection terminal of the single-pole triple-throw switch is coupled to the omnidirectional antenna 420, a second selection terminal of the single-pole triple-throw switch is coupled to one phased array antenna 430, and a third selection terminal of the single-pole triple-throw switch is coupled to the other phased array antenna 430. Based on this, a coverage area of the communication apparatus 400 can be further increased by adding the phased array antenna 430, and an optimal antenna is selected for the user equipment within a larger coverage area to perform data exchange. Certainly, the foregoing communication apparatus 400 may be further extended with reference to the manner in FIG. 10. Details are not described in this embodiment of this application.

In some implementation solutions, as shown in FIG. 11, an antenna in the communication apparatus 400 may include the omnidirectional antenna 420, the phased array antenna 430, and the directional antenna 440. The multiplexer 410 may use a single-pole triple-throw switch that includes one common terminal and three selection terminals. The common terminal of the single-pole triple-throw switch is configured to couple to a transceiver circuit of a radio frequency chain. A first selection terminal of the single-pole triple-throw switch is coupled to the omnidirectional antenna 420, a second selection terminal of the single-pole triple-throw switch is coupled to the phased array antenna 430, and a third selection terminal of the single-pole triple-throw switch is coupled to the directional antenna 440. When data exchange needs to be performed, the multiplexer 410 may connect the common terminal to the first selection terminal by using a control signal output by a coupled processor, to perform the data exchange through the omnidirectional antenna 420. Alternatively, the multiplexer 410 may connect the common terminal to the second selection terminal by using a control signal output by a coupled processor, to perform the data exchange through the phased array antenna 430. Alternatively, the multiplexer 410 may connect the common terminal to the third selection terminal by using a control signal output by a coupled processor, to perform the data exchange through the directional antenna 440. Based on this, the multiplexer 410 is controlled, so that a currently most appropriate antenna can be selected from the omnidirectional antenna 420, the phased array antenna 430, and the directional antenna 440. In the foregoing implementation process, quantities of directional antennas 440 and phased array antennas 430 may be adjusted according to an actual requirement, and a type of the multiplexer 410 may also be adaptively adjusted based on a total quantity of omnidirectional antennas 420, directional antennas 440, and phased array antennas 430. Details are not described in this embodiment of this application.

It may be understood that a structure of the adjustable phase shift circuit 4312 is also merely an example provided in this embodiment of this application. During specific implementation, the foregoing adjustable phase shift circuit 4312 may include more phase shift circuits, and quantities of selection terminals of the first gating switch SPDT1 and the second gating switch SPDT2 may also be adaptively adjusted based on a quantity of phase shift circuits. Details are not described in this embodiment of this application. In addition, in the foregoing implementation process, a quantity of antennas coupled to the adjustable phase shift circuit 4312 may also be expanded according to the actual requirement. For example, an antenna coupled to the adjustable phase shift circuit 4312 may be a 1×4 antenna array including four antennas, or a 1×n antenna array including n antennas. This is not specifically limited in this embodiment of this application.

Further, in the foregoing implementation process, a continuous phase shift circuit may also directly be selected for the foregoing adjustable phase shift circuit 4312. A phase shift value of the continuous phase shift circuit may change continuously in a range of 0° to 360°, so that a quantity of phase shift circuits is reduced.

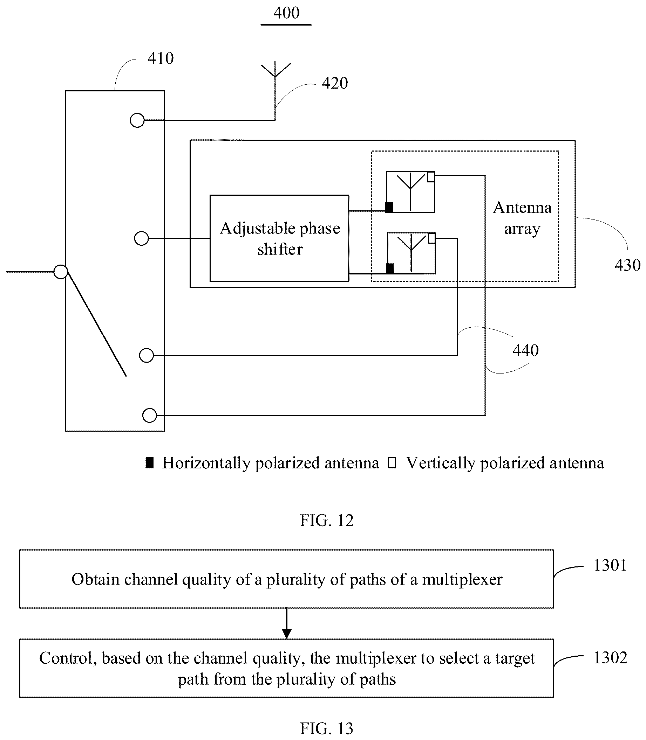

In an implementation solution, as shown in FIG. 12, an antenna array may include a first polarized antenna and a second polarized antenna that have different polarization directions. When the communication apparatus 400 includes the directional antenna and the phased array antenna 430, the adjustable phase shift circuit 4312 is coupled to one or more first polarized antennas in the antenna array, and the directional antenna includes one or more second polarized antennas in the antenna array. For example, the first polarized antenna may be a horizontally polarized antenna, and the second polarized antenna may be a vertically polarized antenna. In this manner, some antennas in the antenna array of the phased array antenna 430 may be reused as directional antennas, so that area costs of the communication apparatus 400 are reduced. Certainly, the adjustable phase shift circuit 4312 may also be coupled to one or more first polarized antennas in the antenna array. The directional antenna includes one or more second polarized antennas in the antenna array. This is not specifically limited in this application. In addition, the first polarized antenna and the second polarized antenna may alternatively use other types of polarized antennas. This is not specifically limited in this embodiment of this application.

In some implementation solutions, as shown in FIG. 13, an embodiment of this application further provides a communication method applied to the communication apparatus 400. The communication method may be performed by a processor or another type of control circuit. An execution process of the method is described as follows.

S1301: Obtain channel quality of a plurality of paths of a multiplexer.

The processor may first obtain packet error rates and signal-to-noise ratios of the plurality of paths. Then, the channel quality of the plurality of paths is determined based on the packet error rates and the signal-to-noise ratios. For example, a multiplexer 410 may switchably connect a common terminal to each selection terminal based on a control signal delivered by the processor, to obtain data packets received by various antennas. In a process of obtaining the data packet, the processor may synchronously obtain channel state information (for example, a signal-to-noise ratio SNR and a packet error rate PER) of various antennas, to obtain the channel quality of the plurality of paths. The processor may obtain computer program instructions from a memory to perform the foregoing process. The memory may be an on-chip memory or an off-chip memory. This is not specifically limited in this embodiment of this application. In addition, it is considered that an adjustable phase shifter 431 in a phased array antenna 430 may receive signals of a plurality of phases. Therefore, in a process of obtaining data packets received by various antennas in a plurality of antenna structures, the processor can control the adjustable phase shifter 431, to comprehensively obtain data packets received by the phased array antenna 430 in each phase shift state.

In the foregoing implementation process, the foregoing processor may use a baseband processor or an independently disposed processor. This is not specifically limited in this embodiment of this application.

S1302: Control, based on the channel quality, the multiplexer to select a target path from the plurality of paths.

Controlling, based on the channel quality, the multiplexer to select the target path from the plurality of paths is to select an optimal antenna mode. In this case, an antenna whose signal-to-noise ratio is lower than a target threshold may be first filtered out, and then the optimal antenna mode is selected from remaining antenna modes. In an example, the target threshold may be obtained through calculation based on a specified filtering threshold and maximum signal-to-noise ratios of the plurality of antenna structures. For example, a filtering threshold SNR_FILTER_TH may be preset, and a signal-to-noise ratio of an i^{th} antenna may be denoted as SNRi. Then, signal-to-noise ratios of optional antennas are sorted, where a maximum signal-to-noise ratio is denoted as SNRmax. Finally, an antenna mode whose signal-to-noise ratio SNRi is less than an average value of SNRmax-SNR_FILTER_TH is filtered out.

When the optimal antenna mode is selected, a packet error rate PER of the data packet may be determined based on the obtained data packet. Then, an antenna mode with a lowest packet error rate PER is used as the optimal antenna mode, the common terminal of the multiplexer 410 is continuously connected to an output terminal corresponding to a target antenna, and the target antenna is used to exchange data with a user equipment. Because the phased array antenna 430 has different phase shift states, the phased array antenna 430 needs to switch to different phase shift states to obtain signal-to-noise ratios and packet error rates in each phase shift state. In addition, when the target path is the phased array antenna 430, the adjustable phase shift circuit 4312 further needs to be adjusted to a corresponding phase shift state.

In the foregoing implementation process, the processor may obtain the computer program instructions from the memory to implement the foregoing process. The computer program instructions executed by the processor may be program instructions corresponding to a pre-trained neural network model or another type of computer program instructions. This is not specifically limited in this embodiment of this application. In addition, S1301 and S1302 may be periodically performed or may be performed after a channel state changes (for example, a signal-to-noise ratio of a channel corresponding to an antenna changes). Details are not described in this embodiment of this application.

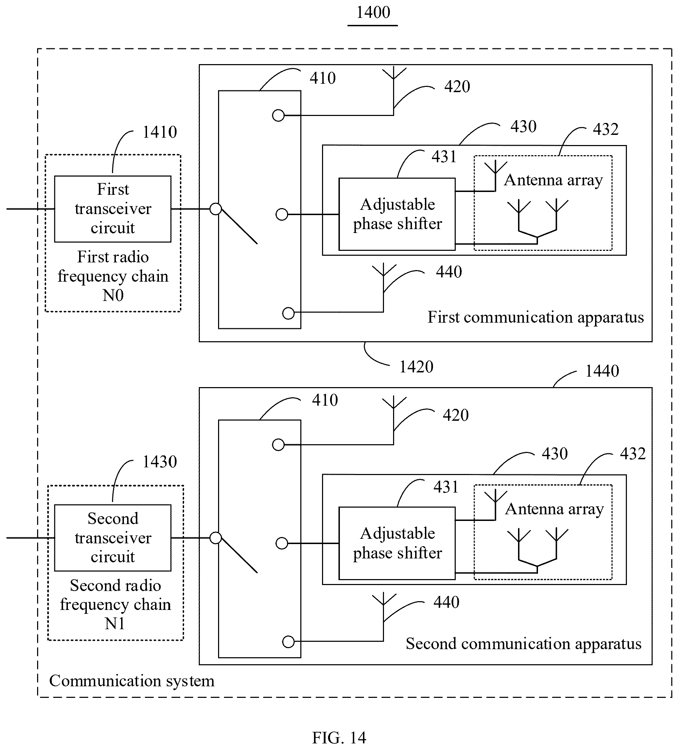

In some implementation solutions, as shown in FIG. 14, an embodiment of this application further provides a communication system 1400. The communication system 1400 includes a first transceiver circuit 1410 in a first radio frequency chain N0 and a first communication apparatus 1420 coupled to the first transceiver circuit 1410. The first communication apparatus 1420 is the communication apparatus 400 in any one of the foregoing implementation solutions. On this basis, still as shown in FIG. 14, the communication system 1400 provided in this embodiment of this application may further include a second transceiver circuit 1430 in a second radio frequency chain N1 and a second communication apparatus 1440 coupled to the second transceiver circuit 1430. The second communication apparatus 1440 may also be the communication apparatus 400 in any one of the foregoing implementation solutions. The second transceiver circuit may also be coupled to a processor, and a multiplexer 410 and an adjustable phase shift circuit 431 in the second communication apparatus may also be coupled to the processor. The processor may uniformly control communication apparatuses corresponding to two transceiver circuits, to provide more user equipments with a most appropriate antenna for data exchange. For example, the first communication apparatus 1410 and the second communication apparatus 1420 in FIG. 14 may be the communication apparatus 400 in FIG. 11. However, in the foregoing implementation process, the first communication apparatus 1410 and the second communication apparatus 1420 may use the communication apparatus 400 in any one of the foregoing implementation solutions. This is not specifically limited in this embodiment of this application.

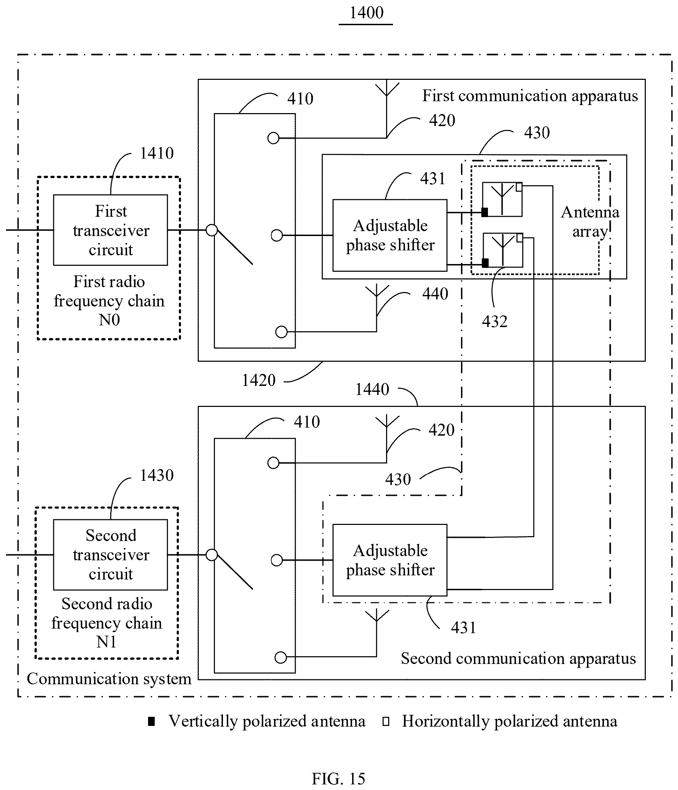

In some implementation solutions, as shown in FIG. 15, on the basis of FIG. 14, an antenna array 432 in a phased array antenna 430 of the first communication apparatus 1410 includes a plurality of first polarized antennas in a first array antenna. An antenna array in the phased array antenna 430 of the second communication apparatus 1420 includes a plurality of second polarized antennas in the first array antenna. The first polarized antenna and the second polarized antenna have different polarization directions. For example, the first polarized antenna may be a horizontally polarized antenna, and the second polarized antenna may be a vertically polarized antenna. In this manner, two communication apparatuses may reuse antennas of different polarization directions of a same array antenna, so that a product area and costs are reduced. In addition, the first polarized antenna and the second polarized antenna may alternatively use other types of polarized antennas. This is not specifically limited in this embodiment of this application.

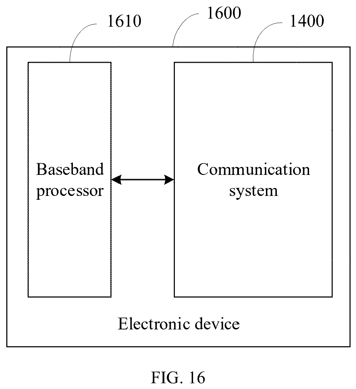

In an implementation solution, as shown in FIG. 16, an embodiment of this application further provides an electronic device 1600. The electronic device 1600 includes a baseband processor 1610 and the communication system 1400 coupled to the baseband processor 1610. The foregoing electronic device may be a series of devices that can be used as an access point, for example, a mobile phone, a computer, a router, or a portable Wi-Fi device. This is not specifically limited in this embodiment of this application. The foregoing processor may be a central processing unit (central processing unit, CPU), a general-purpose processor, a network processor (network processor, NP), a field programmable gate array (field programmable gate array, FPGA), an application-specific integrated circuit (application-specific integrated circuit, ASIC), a system on chip (system on chip, SoC), or any combination thereof. This is not specifically limited in embodiments of this application.

In an implementation solution, an embodiment of this application further provides a computer-readable storage medium. The computer-readable storage medium stores computer program instructions. When the computer program instructions are executed by a processor, the foregoing communication method may be implemented. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner.

In an implementation solution, an embodiment of this application further provides a computer program product. When the computer program product is executed by a processor, the foregoing communication method may be implemented.

Further, in the foregoing implementation process, the communication system or the electronic device in the foregoing example may also include another type of component. This is not specifically limited in this embodiment of this application.

A person of ordinary skill in the art may be aware that, in combination with the examples described in embodiments disclosed in this specification, circuit functions may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed circuit and apparatus may be implemented in other manners. For example, the described device embodiment is merely an example. For example, division into modules is merely logical function division and may be other division during actual implementation. For example, a plurality of modules or components may be combined or may be integrated into another device, or some features may be ignored or not performed. In addition, the displayed or discussed mutual couplings, direct couplings, or communication connections may be implemented through some interfaces. The indirect couplings or communication connections between the devices or modules may be implemented in electronic, mechanical, or other forms.

In addition, circuits in embodiments of this application may be integrated into one device, each of the modules may exist alone physically, or two or more modules are integrated into one device.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication apparatus, comprising a multiplexer and a plurality of antenna structures, wherein the multiplexer comprises a common terminal and a plurality of selection terminals, the common terminal of the multiplexer is coupled to a radio frequency chain, and the common terminal of the multiplexer is configured to switchably connect to different selection terminals of the plurality of selection terminals to form a plurality of paths;
the plurality of antenna structures comprise a phased array antenna, the plurality of selection terminals comprise a first selection terminal, and the phased array antenna is coupled to the first selection terminal; and
the plurality of antenna structures further comprise an omnidirectional antenna, the plurality of selection terminals further comprise a second selection terminal, and the omnidirectional antenna is coupled to the second selection terminal; and/or the plurality of antenna structures further comprise a directional antenna, the plurality of selection terminals further comprise a third selection terminal, and the directional antenna is coupled to the third selection terminal.

2. The communication apparatus according to claim 1, wherein the phased array antenna comprises an adjustable phase shifter and an antenna array, the adjustable phase shifter comprises a power divider and a plurality of adjustable phase shift circuits, the power divider comprises a combining terminal and a plurality of splitting terminals, the antenna array comprises a plurality of antennas, the combining terminal of the power divider is coupled to the first selection terminal, each of the splitting terminals is coupled to one or more antennas in the antenna array through one of the adjustable phase shift circuits, and the adjustable phase shift circuit is configured to perform multi-phase shift selection.

3. The communication apparatus according to claim 2, wherein the adjustable phase shift circuit comprises a first gating switch, a first phase shift circuit, and a second phase shift circuit, and the first gating switch comprises a common terminal, a first selection terminal, and a second selection terminal; and
the common terminal of the first gating switch is coupled to one of the splitting terminals of the power divider, a first terminal of the first phase shift circuit is coupled to the first selection terminal, a first terminal of the second phase shift circuit is coupled to the second selection terminal, and a second terminal of the first phase shift circuit and a second terminal of the second phase shift circuit are coupled to one or more same antennas in the antenna array; or
the common terminal of the first gating switch is coupled to one or more antennas in the antenna array, a first terminal of the first phase shift circuit and a first terminal of the second phase shift circuit are both coupled to one of the splitting terminals of the power divider, a second terminal of the first phase shift circuit is coupled to the first selection terminal, and a second terminal of the second phase shift circuit is coupled to the second selection terminal.

4. The communication apparatus according to claim 2, wherein the adjustable phase shift circuit comprises a first gating switch, a second gating switch, a first phase shift circuit, and a second phase shift circuit, and each of the first gating switch and the second gating switch comprises a common terminal, a first selection terminal, and a second selection terminal;
the common terminal of the first gating switch is coupled to one of the splitting terminals of the power divider, a first terminal of the first phase shift circuit is coupled to the first selection terminal of the first gating switch, and a first terminal of the second phase shift circuit is coupled to the second selection terminal of the first gating switch; and
a second terminal of the first phase shift circuit is coupled to the first selection terminal of the second gating switch, a second terminal of the second phase shift circuit is coupled to the second selection terminal of the second gating switch, and the common terminal of the second gating switch is coupled to one or more antennas.

5. The communication apparatus according to any one of claims 2 to 4, wherein the antenna array comprises a plurality of first polarized antennas in a first array antenna, and the directional antenna comprises one or more second polarized antennas in the first array antenna; or the antenna array comprises a plurality of second polarized antennas in a first array antenna, and the directional antenna comprises one or more first polarized antennas in the first array antenna, wherein the first polarized antenna and the second polarized antenna have different polarization directions.

6. A communication system, comprising a first transceiver circuit and a first communication apparatus coupled to the first transceiver circuit, wherein the first communication apparatus is the communication apparatus according to any one of claims 1 to 5.

7. The communication system according to claim 6, further comprising a second transceiver circuit and a second communication apparatus coupled to the second transceiver circuit, wherein the second communication apparatus is the communication apparatus according to any one of claims 1 to 5.

8. The communication system according to claim 7, wherein an antenna array in a phased array antenna of the first communication apparatus comprises a plurality of first polarized antennas in a first array antenna, an antenna array in a phased array antenna of the second communication apparatus comprises a plurality of second polarized antennas in a first array antenna, and the first polarized antenna and the second polarized antenna have different polarization directions.

9. An electronic device, comprising a baseband processor, and the communication system according to any one of claims 6 to 8 coupled to the baseband processor.

10. A communication method, applied to a communication apparatus, wherein the communication apparatus comprises a multiplexer and a plurality of antenna structures, the multiplexer comprises a common terminal and a plurality of selection terminals, the common terminal of the multiplexer is coupled to a radio frequency chain, the common terminal of the multiplexer is configured to switchably connect to different selection terminals of the plurality of selection terminals to form a plurality of paths, the plurality of antenna structures comprise a phased array antenna, the plurality of selection terminals comprise a first selection terminal, and the phased array antenna is coupled to the first selection terminal; the plurality of antenna structures further comprise an omnidirectional antenna, the plurality of selection terminals further comprise a second selection terminal, and the omnidirectional antenna is coupled to the second selection terminal, and/or the plurality of antenna structures further comprise a directional antenna, the plurality of selection terminals further comprise a third selection terminal, and the directional antenna is coupled to the third selection terminal, wherein the method comprises:
obtaining channel quality of the plurality of paths; and
controlling, based on the channel quality, the multiplexer to select a target path from the plurality of paths.

11. The method according to claim 10, wherein obtaining the channel quality of the plurality of paths comprises:
obtaining packet error rates and signal-to-noise ratios of the plurality of paths; and
determining the channel quality of the plurality of paths based on the packet error rate and the signal-to-noise ratio.

12. A computer-readable storage medium, storing computer program instructions, wherein when the computer program instructions are executed by a processor, the method according to claim 10 or 11 is implemented.
